# EUROPEAN PATENT APPLICATION

(11) **EP 4 600 291 A1**
(43) Date of publication of application: **13.08.2025**
(21) Application number: 24156725.4
(22) Date of filing: 09.02.2024
(51) Int. Cl.: C08J 3/05

(54) **DISPERSION OF PARTICLES OF A FLUOROPOLYMER, PREPARATION METHOD, AND USE**

(71) Applicant: Joanneum Research Forschungsgesellschaft mbH, 8010 Graz (AT)
(72) Inventor: Krawczyk, Krzysztof, 8160 Weiz (AT); Groten, Jonas, 8047 Graz (AT); Popovic, Karl, 8042 Graz (AT); Wheeldon, Alexander, 8020 Graz (AT); Seling, Markus, 5600 St. Johann im Pongau (AT)
(74) Representative: Strehl & Partner mbB

(57) **Abstract**

A dispersion of particles of a fluoropolymer in a dispersion medium, wherein the particles have a size of 5 µm or less and the dispersion medium contains a Solvent B and optionally a Solvent C, wherein Solvent B does not dissolve the fluoropolymer at room temperature, wherein Solvent B is a Solvent A, which is an aromatic compound, and/or a Solvent B1, which is Solvent B differing from the aromatic compound being Solvent A, and Solvent C dissolves the fluoropolymer at room temperature; a method of preparing the dispersion; a method of depositing a fluoropolymer on a substrate; and a product comprising a substrate and a fluoropolymer deposited on the substrate.

## Description

### Field of the invention

The present invention relates to a dispersion of particles of a fluoropolymer and a method of preparing the dispersion. The dispersion can be used as an ink or a coating.

### Background art

Currently, formulations that contain fluoropolymers and are used for printing are (true) solutions of the fluoropolymers. Typically, solutions with concentrations of 100-200 g/L of fluoropolymer are used as high-viscosity inks or pastes for screen printing, and formulations of dissolved fluoropolymer having very low concentrations of less than 2 % are used for inkjet-printing. Even at very low concentrations, solutions of fluoropolymers exhibit considerable viscosity and non-Newtonian properties that impair jettability. As a result, the use of a dissolved polymer for deposition methods such as inkjet or aerosol printing is ruled out because of rheological requirements of the ink.

Dispersed copolymers of poly(vinylidene fluoride) in the form of stable nanoparticle dispersions may be prepared in a synthesis method which is based on a non-solvent induced, surfactant-free ("ouzo-type") precipitation. Below a layer of methanol, a layer of pure acetone is injected with a needle to act as an intermediate layer. Below this intermediate layer, a diluted solution of poly(vinylidene fluoride-trifluoroethylene) (P(VDF-TrFE)) is injected, and the layers are left to slowly diffuse into each other. Spontaneous precipitation occurs at the interface and is described to result in stable diluted dispersions of small nanoparticles, most likely composed of single strands of the copolymer. The drawback of the method is its lack of scalability since the process itself is long and tedious and the obtained nanoparticle dispersions are highly dilute.

Another synthesis method comprises injecting a low concentration solution of dissolved P(VDF-TrFE) in THF into a water reservoir ten times the initial volume under vigorous stirring, resulting in the formation of nanoparticles. The THF is removed by heating. The main problem using this approach is the low concentration of the resulting dispersion. In addition, the dispersive phase is water, which flocculates the single particles, forming agglomerates that cannot be centrifuged and redispersed in other solvents.

A further synthesis method comprises dialyzing a solution of dissolved P(VDF-TrFE) in dimethylacetamide (DMA) against distilled water. The dialysis membrane allows for exchange of the two solvents and therefore allows the polymer to precipitate in the non-solvent (water) thus forming nanoparticles. This dialysis process is tedious and the synthesis results in low concentrated aqueous dispersions of nanoparticles.

Currently, the only scalable method to obtain nanoparticles of fluoropolymers such as P(VDF-TrFE) copolymer is via emulsion polymerization. The emulsions are aqueous dispersions of monomer droplets, which are then polymerized via radical polymerization. The method requires additives such as surfactants and waxes that may decrease the performance of the copolymers for many applications. Importantly, liquid dispersions of nanoparticles of P(VDF-TrFE) copolymers only exist as an intermediate formulation and are not available commercially. Commercial nanopowders of P(VDF-TrFE) from which the surfactants were extracted contain only small amounts of very small, colloidal particles while most of the material is aggregated into larger aggregates that cannot be re-dispersed completely. None of these formulations can be transformed into a stable particle dispersion that would be usable for printing.

### Problem to be solved by the invention

There is no prior art dispersion of particles of fluoropolymers that can be used for printing. Furthermore, there are no scalable methods for the preparation of particles of fluoropolymers from pure polymer (e.g., in powder or pellet form). In particular, there is no method that is readily scalable and allows the preparation of particles from commercially available polymer feedstock in at least multi-gram amounts.

Therefore, the problem underlying the present invention was to provide a dispersion of fluoropolymer particles and a method of preparing a highly concentrated stable dispersion of fluoropolymer particles.

### Summary of the invention

The problem underlying the present invention was solved by providing a dispersion containing a specific dispersion medium and a method using a specific preparation process.

The present application covers the following aspects.
[1] A dispersion of particles of a fluoropolymer in a dispersion medium, wherein the particles have a size of 5 µm or less and the dispersion medium contains a Solvent B and optionally a Solvent C, wherein
   Solvent B does not dissolve the fluoropolymer at room temperature, wherein Solvent B is a Solvent A, which is an aromatic compound, and/or a Solvent B1, which is Solvent B differing from the aromatic compound being Solvent A, and
   Solvent C dissolves the fluoropolymer at room temperature.
[1-1] The dispersion according to aspect [1], wherein at least 90 mass% of the particles have a size of 5 µm or less.
[1-2] The dispersion according to any of the preceding aspects, wherein the dispersion medium contains 50 to 100 parts of Solvent B and 0 to 50 parts of Solvent C in a total of 100 parts of Solvent B and Solvent C.
[1-3] The dispersion according to any of the preceding aspects, wherein the dispersion medium contains Solvent B and Solvent C.
[1-4] The dispersion according to any of the preceding aspects, particularly aspect [1-3], wherein the dispersion contains at least 50 %, preferably at least 80 % of the fluoropolymers in the form of dispersed particles of a size of 5 µm or less at room temperature.
[1-5] The dispersion according to any of the preceding aspects, wherein the dispersion contains less than 20 %, preferably less than 10 % of the fluoropolymer in dissolved form at room temperature.
[1-6] The dispersion according to any of the preceding aspects, particularly aspect [1-3], wherein Solvent C has a higher boiling point than Solvent B.
[1-7] The dispersion according to any of the preceding aspects, wherein Solvent B and Solvent C make up more than 80 %, preferably more than 90 % of the liquid components in the dispersion.
[1-8] The dispersion according to any of the preceding aspects, wherein at least 50 mass%, preferably at least 90 mass% of the particles have a size of 1 µm or less and preferably at least 20 nm.
[1-9] The dispersion according to any of the preceding aspects, particularly aspect [1-4], wherein the dispersion contains Solvent A and Solvent C.
[2] The dispersion according to any of the preceding aspects, wherein Solvent A is at least one compound represented by formula (1) or formula (2) defined below.
[2-1] The dispersion according to any of the preceding aspects, wherein Solvent B1 differs from the compounds of formula (1) and (2).
[3] The dispersion according to any of the preceding aspects, wherein the dispersion contains Solvent B and Solvent C and wherein the rates of evaporation of Solvents B and C from the dispersion are such that the solvent ratio of C/B in the dispersion increases.
[3-1] The dispersion according to any of the preceding aspects, wherein the rate of evaporation of Solvent C is higher than the rate of evaporation of Solvent B at a temperature in the range of 90 to 150 °C.
[3-2] The dispersion according to any of the preceding aspects, wherein the vapor pressure of Solvent C is lower than the vapor pressure of Solvent B.
[3-3] The dispersion according to any of aspects [3] to [3-2], wherein Solvent B is Solvent A.
[3-4] A combination of aspects [3-3] and [1-4].
[4] The dispersion according to any of the preceding aspects, wherein the dispersion contains Solvent A, Solvent B1, and Solvent C.
[4-1] The dispersion according to any of the preceding aspects, wherein the dispersion medium contains 1 to 40 parts of Solvent A, 50 to 90 parts of Solvent B1, and 1 to 30 parts of Solvent C in a total of 100 parts of the Solvent A, Solvent B1, and Solvent C.
[4-2] A combination of aspects [1-4], [1-6] and [4-1].
[5] The dispersion according to any of the preceding aspects, wherein the fluoropolymer is a copolymer.
[5-1] The dispersion according to any of the preceding aspects, wherein the fluoropolymer is a copolymer of P(VDF).
[5-2] The dispersion according to any of the preceding aspects, wherein the fluoropolymer is a piezoelectric copolymer.
[5-3] The dispersion according to any of the preceding aspects, wherein the copolymer is P(VDF-TrFE).
[6] The dispersion according to any of the preceding aspects, wherein the concentration of the fluoropolymer is more than 10 g/l.
[6-1] The dispersion according to any of the preceding aspects, wherein the concentration of the fluoropolymer is more than 20 g/l, preferably more than 50 g/l.
[7] The dispersion according to any of the preceding aspects, which is suitable for being used in printing or coating.
[7-1] The dispersion according to any of the preceding aspects, wherein the printing or coating is inkjet printing, aerosol printing, screen printing, stencil printing, flexographic printing, gravure printing, solenoid valve printing, dispensing, spray coating, dip coating, spin coating.
[8] A method of preparing a dispersion as described in any of the preceding aspects, comprising the steps of (i) mixing a fluoropolymer and a dispersion medium containing Solvent A to obtain a mixture, wherein the fluoropolymer is not dissolved in the mixture, (ii) heating the mixture to obtain a solution, wherein the fluoropolymer is at least partially dissolved in the solution containing Solvent A, and (iii) cooling the solution to obtain the dispersion of particles having a size of 5 µm or less.
[8-1] The dispersion according to aspect [8], wherein mixing in step (i) is carried out at a temperature in the range of 18 to 35 °C, preferably at room temperature, and the solution is cooled to a temperature in the range of 18 to 35 °C, preferably to room temperature.
[8-2] The dispersion according to aspect [8] or [8-1], wherein Solvent A makes up at least 50 %, preferably at least 80 % of the liquid components of the dispersion medium used in step (i).
[8-3] The dispersion according to any of aspects [8] to [8-2], wherein Solvent A is as defined in aspect [2].
[9] The method according to aspect [8], comprising the additional steps of (iv) reducing the content of the dispersion medium of the dispersion to obtain a concentrate and (v) mixing the concentrate with a dispersion medium containing Solvent B to obtain a dispersion of the particles.
[9-1] The method according to aspect [9], wherein mixing in step (v) is carried out at a temperature of 18 to 25 °C, preferably at room temperature, and the solution is cooled to a temperature of 18 to 25 °C, preferably to room temperature in step (iii).
[9-2] The method according to aspect [9] or [9-1], wherein Solvent B does not dissolve the fluoropolymer at the mixing temperature.
[9-3] The method according to any of aspects [9] to [9-2], wherein the dispersion medium added in step (v) differs from the dispersion medium removed in step (iv).
[9-4] The method according to any of aspects [9] to [9-3], wherein Solvent B contained in the dispersion medium added in step (v) differs from Solvent A contained in the dispersion medium removed in step (iv).
[9-5] The method according to any of aspects [9] to [9-4], wherein step (iv) is not carried out by heating and is preferably carried out by centrifugation or filtration.
[9-6] The method according to any of aspects [9] to [9-5], wherein the volume of the dispersion medium added in the step (v) is lower than the volume of the dispersion medium removed in the step (iv), whereby the concentration of the particles in the dispersion is increased.
[10] The method according to aspect [9] wherein the dispersion medium added in step (v) contains Solvent C in addition to Solvent B.
[10-1] The method according to aspect [10], wherein the dispersion obtained in the step (v) contains at least 50 %, preferably at least 80 % of the fluoropolymers in the form of dispersed particles having a size of 5 µm or less at room temperature.
[10-2] The method according to aspect [10] or [10-1], wherein the dispersion obtained in the step (v) contains less than 20 %, preferably less than 10 % of the fluoropolymer in dissolved form at room temperature.
[11] A method of depositing a fluoropolymer on a substrate, wherein the method comprises a step of applying the dispersion of any of aspects [1] to [7] on a substrate and a step of drying the dispersion by at least partly evaporating the dispersion medium.
[12] The method of aspect [11], wherein the dispersion contains Solvent B and Solvent C and the step of drying comprises at least partly evaporating Solvent B, thereby increasing the solvent ratio of C/B.
[12-1] The method according to aspect [12], wherein the increasing solvent ratio C/B results in an increased ratio of dissolved fluoropolymer, and the dissolved fluoropolymer is cured upon further drying.
[13] The method according to aspect [11] or [12], which is printing or coating.
[13-1] The method according to aspect [13], which is inkjet printing, aerosol printing, screen printing, stencil printing, flexographic printing, gravure printing, solenoid valve printing, dispensing, spray coating, dip coating, or spin coating.
[14] A product comprising a substrate and a fluoropolymer deposited on the substrate, obtainable by the method of any one of aspects [11] to [13].
[14-1] The product according to aspect [14], wherein the dispersion of any of claims 1 to 7 contains Solvent A, and wherein the product contains residual amounts of Solvent A.

### Advantages of the invention

The dispersion of the present invention or the dispersion obtainable by the method of the present invention can be provided at a high concentration and can thus be advantageously used in coating and printing processes such as inkjet printing. In particular, the dispersion may have a concentration of more than 50 g/L of the fluoropolymer, which is one order of magnitude higher than for the prior art methods. The dispersion is indefinitely stable and can be obtained from commercial polymer feedstock. The advantageous properties of the dispersion can be achieved without the use of surfactants or other additives.

The dispersion can particularly be used for printing inks containing the ferroelectric polymer P(VDF-TrFE), which is an essential component of the applicant's ferroelectric sensor technology.

The method of the present invention is scalable and potentially adaptable to continuous flow conditions.

Solvent A is generally non-toxic and environmentally friendly. It can be easily recycled by decantation, without the need to distilling the solvent. Up to 10 recycling sequences were tested without any observable decrease in the quality.

### Embodiments of the invention

Herein, the terms "the dispersion", "the dispersion medium", "the method", and "the product" refer to "the dispersion of the present invention or obtainable by the method of the present invention", ""the dispersion medium contained in the dispersion or used in the method of the present invention", "the method of the present invention", and "the product of the present invention", respectively. Similarly, each of the terms "Solvent A", "Solvent B", and "Solvent C" refers to the respective solvent contained in the dispersion or used in the method of the present invention. "The particles of a fluoropolymer" that are contained in the dispersion or used in the method of the present invention are sometimes simply referred to "the particles".

Herein, percentages (%) are percentages of mass per volume, and parts are parts by mass, unless explicitly indicated otherwise. Room temperature (RT) is 21 °C.

### Dispersion

The dispersion contains particles of a fluoropolymer and a dispersion medium. The dispersion contains the particles in dispersed form at least at room temperature. The particles of a fluoropolymer have a size of 5 µm or less. Herein, the size of the particles is measured by using a steel mesh filter without applying pressure. For instance, particles having a size of 5 µm or less can pass a 5 µm steel mesh filter without applying pressure, and particles of 1 µm or less can pass a 1 µm filter. Hence, the feature "the particles have a size of 5 µm or less" means "the particles have a size of 5 µm or less, as measured by using a 5 µm steel mesh filter without applying pressure".

In addition to the particles having a size of 5 µm or less, the dispersion may contain larger particles of a fluoropolymer. Preferably, at least 90 mass% of the particles have a size of 5 µm or less.

The source of the particles is not restricted. They may be obtained by the method of the present invention or otherwise, including emulsion polymerization, precipitation, and dialysis. The desired dispersion of the present invention may be obtained by solvent replacement, if necessary.

The fluoropolymer is preferably a crystalline and semi-crystalline copolymer or a terpolymer. More preferably, it is the copolymer P(VDF-TrFE). Examples of terpolymers are P(VDF-TrFE-CTFE) and P(VDF-TrFE-CFE).

The dispersion does not necessarily contain all the fluoropolymer in the form of dispersed particles. In particular, at least some the fluoropolymer may be contained in dissolved form in the dispersion.

The dispersion medium contains or consists of Solvent B or Solvent B and Solvent C. The dispersion medium may contain liquid components other than Solvents A and B. These liquid components other than Solvents A and B may be solvents or non-solvents of the fluoropolymer.

The dispersion medium makes up at least 80 %, preferably at least 90 % of the components other than the fluoropolymer in the dispersion. The dispersion may contain additives described below.

The dispersion may contain more than 50 g/l of particles of a fluoropolymer in dispersed form and is preferably suitable for being used in printing or coating processes.

### Solvent A

Solvent A does not dissolve the fluoropolymer at room temperature and is thus a subgroup of Solvent B. Solvent A may be a single solvent or a mixture of solvents. Solvent A is an aromatic compound and is preferably at least one compound represented by formula (1) or formula (2):

Xₙ-Phenyl-COY (1)

Xₙ-Phenyl-OR (2)

wherein X is selected from the group consisting of H, alkyl, halogen, OR, SR, and NR; n is 1 to 5; the substituent(s) X may be in any of position(s) 2, 3, 4, 5 and 6 of the phenyl group; Y is H, alkyl, OR, SR, or NR; and R is hydrogen, alkyl, acyl, aryl, COO-alkyl (i.e., COOR, wherein R is alkyl), or halogenated alkyl.

Preferably, Solvent A at least partially dissolves the fluoropolymer at elevated temperatures.

Specifically, Solvent A is at least one compound selected from the group consisting of p-anisaldehyde, 4-methoxy-propiophenone, and propiophenone.

Solvent A of formula (2) may be preferred. There seems to be a link between the presence of a methoxy-group (preferably in the p-position, according to the tested examples) and an increased stability of the dispersion, even at high concentrations.

### Solvent B

Solvent B does not dissolve the fluoropolymer at room temperature. Solvent B may be a single solvent or a mixture of solvents. At elevated temperatures, Solvent B dissolves the fluoropolymer not, partially, or fully. Solvent B encompasses Solvent A and Solvent B1. In a dispersion or a dispersion medium containing both Solvent A and Solvent B1, these two solvents differ from one another. If Solvent B1 is an aromatic compound, it is not the aromatic compound being Solvent A.

Solvent B, particularly Solvent B1 may introduce a functionality such as jettability, wettability, viscosity, and contact properties to a substrate.

Specifically, Solvent B may be at least one compound selected from the group consisting of 1,3-dimethoxybenzene, 3,3,5-trimethylcyclohexanone, ethanol, methanol, 1-methoxy-2-propanol, isopropanol, terpineol, diethylene-glycol-monomethyl-ether, 1-ethoxy-2-propanol, dipropylene-glycol-methyl ether-acetate, and a compound of Solvent A.

### Solvent C

Solvent C dissolves the fluoropolymer at room temperature. Solvent C may be a single solvent or a mixture of solvents.

Specifically, Solvent C may be at least one compound selected from the group consisting of dimethyl sulfoxide, gamma-butyrolactone, triethyl phosphate isophorone, tripropyl phosphate, tributyl phosphate, dimethylacetamide, dimethylformamide, propylene carbonate, or ethylene carbonate.

### Additives

The dispersion medium may contain additives. The additives may play different roles and are thus added in various amounts. Examples of additives are the following:
(i) Rheology modifying additives - used in small amounts used to reduce surface tension (jetting properties, properties before deposition).
(ii) Additives to adjust wetting, flow, deaeration (defoamers), and recoating. There are 2 subtypes: (ii-1) - small molecular additives and (ii-2) pre-polymeric/ polymerizable (playing a role similar to additives (iii-b)). Both adjust properties of fluoropolymer films after deposition, during curing and of the cured films.
(iii) Additives that are used to change the properties of the fluoropolymer layers. There are two subtypes: (iii-a) polymeric additives that improve the electric insulation of the layer and (iii-b) rheology modifying additives such as elastomers and elastomer pre(polymers) or other pre-polymers (e.g. photocurable, compare with a sub-type of additive (ii)).

Generally, most of additives (i) and (ii) are used at very low concentration. The concentration of (i) is calculated for the total ink weight or volume and is typically 0.01-1%, more specifically 0.05-0.5%. The concentration of (ii) is calculated based on the dry residue of fluoropolymer. The concentration of (ii-1) is typically similar to (i) and is thus roughly 0.2-20% of the dry fluoropolymer residue (more specifically 1-10% - calculation based on a fluoropolymer concentration in the ink of 5% - which is a useful concentration for manufacturing sensors). The concentration of (ii-2) may be 5-80% of the dry polymer residue. Similarly, the concentration of (iii) may be 5-80%.

Additive (iii-a) may be used to improve the electric insulation of the layer. Useful fluoropolymers, like P(VDF-TrFE) are semi crystalline which means that they have a very high crystallinity and their crystals, albeit microscopic, are in the range of 100 nm to few µm and are thus comparable in size with the film thickness of very thin printed layers. Because of this innate crystallinity, it is often difficult to manufacture "electrically tight" thin layers, especially if the electrodes on top are printed with a low-viscosity conductive ink (which is the aim in "fully" printed fluoropolymer sensors as described herein). The ink would enter the voids between micro-crystallites of P(VDF-TrFE) and short - circuit with the bottom electrode, especially if a voltage of about 50V/µm layer thickness has to be applied for poling. In that case a suitable additive may be a polymer with sufficiently high ε, low molecular weight (to not add to the overall viscosity and impair printability) and minute own crystallinity. It should also not impair the crystallization of the fluoropolymer. Such polymer will fill the gaps between the micro-crystallites of the fluoropolymer and prevent the formation of short circuits.

### Method of preparing the dispersion

The method of preparing the dispersion is defined by "temperature cycling" comprising the steps of (i) mixing a fluoropolymer and a dispersion medium containing Solvent A to obtain a mixture, wherein the fluoropolymer is not dissolved in the mixture, (ii) heating the mixture to obtain a solution, wherein the fluoropolymer is at least partially dissolved in the solution containing Solvent A, and (iii) cooling the solution to obtain the dispersion of particles having a size of 5 µm or less. If needed, the temperature cycling can be repeated, whereas the quality of the dispersion resulting from the size and size distribution of the fluoropolymer particles may initially improve in every cycle or at least not deteriorate. After some number of cycles (typically 1-5), further temperature cycling seems to have little effect on the quality of the dispersion.

The preparation method is based on a novel mechanism prompted by temperature cycling. Without the wish to be bound by theory, the novel process seems to be an "ouzo type" precipitation, in which the nanodroplets/nanoparticles form a stable dispersion without the need to stabilize the droplet/particle-solvent interface with a surfactant. In contrast to known "ouzo type" systems, the dispersion of the present invention is formed spontaneously upon thermal treatment of the fluoropolymer-containing mixture in a single solvent, rather than mixing the material which is dissolved in a good solvent with a non-solvent that is miscible with the good solvent.

The dispersion obtained by "temperature cycling" may be subjected to a "solvent replacement" comprising the steps of (iv) reducing the content of the dispersion medium of the dispersion to obtain a concentrate and (v) mixing the concentrate with a dispersion medium containing Solvent B and optionally Solvent C to obtain a dispersion of the particles.

Both the dispersion obtained by "temperature cycling" and the dispersion obtained by "solvent replacement" are dispersions according to the present application and can be used for the methods such as coating and printing described herein.

In the temperature cycling process, mixing in step (i) is preferably carried out at a temperature in the range of 18 to 35 °C. The dispersion medium contains Solvent A and does not dissolve the fluoropolymer. Hence, all solvents contained in the dispersion medium are non-solvents at the mixing temperature. The fluoropolymer is dissolved upon heating in step (ii). Solvent A dissolves the fluoropolymer at the heating temperature. In step (iii), the dispersion is obtained upon cooling. The cooling temperature may be the same temperature as in step (i) or a different temperature.

In the solvent replacement process, the step of (iv) reducing the content of the dispersion medium of the dispersion may be carried out by centrifugation or filtration to obtain a concentrate. The step (v) of mixing the concentrate with a dispersion medium containing Solvent B is carried out at a temperature at which the fluoropolymer is not dissolved. Preferably, the dispersion medium added in step (v) differs from the dispersion medium removed in step (iv) to achieve solvent replacement. After step (v), several or multiple cycles of removing the solvent and adding a solvent may be carried out to achieve the desired extent of solvent replacement. If desired, the solvent replacement may decrease or increase of the concentration of the particles in the dispersion.

### Deposition method and product

The deposition method may be any method of applying the dispersion on a substrate, e.g., a printing or coating method. A specific application of the deposition method is the preparation of inkjet-printed piezoelectric and pyroelectric sensors. Examples of the substrate are paper, metal, and polymers.

After deposition the dispersion on the substrate, the deposited dispersion is cured, i.e., dried at a given temperature that is preferably significantly higher than room temperature. The temperature of curing depends inter alia on the fluoropolymer. The preferred curing temperature for P(VDF-TrFE) is in the range of 90-150 °C, preferably 100-140 °C, most preferably 110-135 °C, to achieve an optimal crystallinity of the polymer.

The dispersion deposited on the substrate contains Solvent B as the non-solvent, and Solvent C. Preferably, the rate of evaporation of Solvent C is lower than the rate of evaporation of Solvent B. This relationship applies to any temperature. Solvent C having a lower rate of evaporation has a lower vapor pressure and typically a higher boiling point.

The functions of Solvent B (including Solvent A) and Solvent C in a dispersion used in a deposition process are as follows: Solvent B is a non-solvent of the fluoropolymer, while Solvent C is a solvent at the deposition temperature. The solvents are selected such that the non-solvent property dominates, and the fluoropolymer is a stable nanoparticle. After depositing the dispersion on the substrate, the deposition is cured, i.e., dried. During curing, the non-solvent evaporates faster than Solvent C, whereby the solvent ratio of C/B increases and the fluoropolymer is dissolved. Upon further evaporation of Solvent C, the fluoropolymer crystallizes from the solution. This process enables the preparation of a homogenous and electrically insulating layer containing highly crystalline fluoropolymers. The last step of dissolving the fluoropolymer in Solvent C imitates the conventional processes using only Solvent C.

After curing, residual amounts of Solvent A may be contained in the product comprising a substrate and a fluoropolymer deposited on the substrate. Solvent A cannot be easily removed from the product. Even multiple cycles of washing (e.g., centrifugation and redispersion in Solvent B) will result in a product containing traces of Solvent A that are detectable by methods such as GC-MS.

Furthermore, residual amounts of traceable markers that might be characteristic for Solvent A will be found for compounds such as anisaldehyde (e.g., p-anisidic acid as result of air oxidation of anisaldehyde)

### Examples

### Example 1

Dispersions were prepared according to method of the present invention.

A sample of 0.25 g of P(VDF-TrFE) powder (Piezotech, FC20) was dissolved in 10 mL of Solvent A (anisaldehyde)upon heating on a hot plate with occasionally shaking the container to give a clear solution with low viscosity. This solution was left to cool down to RT without stirring. During cooling, the sample gradually becomes turbid, beginning from the bottom of the container. A milky dispersion was formed within 1 h of standing. The dispersion had approximately the same viscosity as the solvent and was stable even after many days of incubation at RT.

The dispersion was centrifuged for 10 minutes at 4000 g to partly remove Solvent A. Then, the concentrated dispersion was redispersed in the same volume of Solvent B (1,3-DMB, 3,3,5-TMC, or 2-methoxy-propanol) in the same container via shaking and/or sonication to obtain stable dispersions. The washing and redispersing steps was repeated many times until only traces of Solvent A were present in the dispersion. The obtained dispersions were diluted to 10 times their original volume and spotted on a substrate that was used for scanning electron microscopy (SEM) imaging.

This process was shown to be suitable for preparing samples with a concentration of 1 g/L to 5 g/L ,7 g/L, 9 g/L, 12 g/L, 25g/L, 37.5 g/L, 50 g/L, and 100 g/L of the fluoropolymer in Solvent A.

The process yielded two populations of particles. In the SEM images, one population was around 0.5 µm in diameter, the other population was around 30-200 nm in diameter. The stable dispersions could be passed through a 5, 3 and 1 µm steel mesh filters (Cobetter Filtration) using gravitational force alone or by applying slightly elevated pressure. No residue was found on the filter after filtration was finished, proving that the dispersed particles had diameters smaller than the nominal mesh size of the filter membranes.

### Example 2

The following three concepts for printing concentrated fluoropolymer dispersions were formulated and studied:
(1) Dispersion of particles in Solvent B.
(2) Dispersion of particles in Solvent A or a group of solvents selected from Solvent B1, in which the polymer at least partially dissolves at elevated temperature.
(3) Dispersion of particles in a mixture of Solvent B and Solvent C, wherein Solvent C optionally has a lower evaporation rate than Solvent B.

For each concept, an ink having a concentration of at least 5 % could be formulated. Particularly high concentrations were reached in concept (3). It was possible to formulate jettable inks with a concentration of 8 % with a perspective for even more concentrated inks. Concept (3), particularly in the case of having a lower relative evaporation rate than the other solvents, has advantageous effects in that, during the curing of the ink, the non-solvents evaporate first and the concentrated polymer is allowed to crystallize from solvent C, which leads to coalescence of the polymer particles/ strands, the formation of optimal crystallites (less crystalline β-phase) and thus optimal performance of the sensors, a high layer homogeneity, and the absence of holes in the fluoropolymer layer.

The printability of the inks could be improved by using suitable additives. Different additives, e.g., additives based on polyether-siloxane copolymers, were tested in different concentrations (between 0.5 - 0.01 %) in the inkjet inks. Additives were discovered that met the desired requirements at a loading of less than 0.5 % additive. Higher loadings of the additives impaired the properties of the fluoropolymer sensors and did not further improve printing properties. For studying the inkjet printed ferroelectric sensors of P(VDF-TrFE), the polymer was ink-jetted on a bottom electrode manufactured from PEDOT:PSS via screen printing. A top electrode was later manufactured in a similar manner. In the next step, fully inkjet-printed ferroelectric sensors was prepared by manufacturing top and bottom electrodes from inkjet-printed conductive silver ink.

The Spectra SL printhead was used for inkjet printing and different resolutions (300-1200 dpi) were tested. The printed sheets were placed in a vacuum oven at 130 °C for 30 minutes or up to one hour to cure. Such conditions are similar to the standard curing conditions used for screen-printed PyzoFlex^{®} sensors. The samples, after providing with a top electrode, were poled using standard AC poling methods and characterized in SEM. The SEM image of a cross section of the inkjet printed sensor showed that the layer thickness of the samples (printed in a single pass at 800 dpi) is 4.354 µm.

The coercive field was calculated from the measured layer thicknesses and the AC pole data and was typically around 50 V/µm. This exact value was calculated by dividing the voltage (214 V) by the layer thickness (4.354 µm), giving the expected value of 49.17 V/µm, thus proving that the inkjet-printed sensors have very similar characteristics to the screen-printed ones. The remnant polarization was 75 mC/m².

## Claims

1. A dispersion of particles of a fluoropolymer in a dispersion medium, wherein the particles have a size of 5 µm or less and the dispersion medium contains a Solvent B and optionally a Solvent C, wherein
Solvent B does not dissolve the fluoropolymer at room temperature, wherein Solvent B is a Solvent A, which is an aromatic compound, and/or a Solvent B1, which is Solvent B differing from the aromatic compound being Solvent A, and
Solvent C dissolves the fluoropolymer at room temperature.

2. The dispersion according to claim 1, wherein Solvent A is at least one compound represented by the following formula (1) or formula (2):
Xₙ-Phenyl-COY (1)
Xₙ-Phenyl-OR (2)
wherein X is selected from the group consisting of H, alkyl, halogen, OR, SR, and NR; n is 1 to 5; the substituent(s) X may be in any of position(s) 2, 3, 4, 5 and 6 of the phenyl group; Y is H, alkyl, OR, SR, or NR; and R is hydrogen, alkyl, acyl, aryl, COO-alkyl, or halogenated alkyl.

3. The dispersion according to any of the preceding claims, wherein the dispersion contains Solvent B and Solvent C and wherein the rates of evaporation of Solvents B and C from the dispersion are such that the solvent ratio of C/B in the dispersion increases.

4. The dispersion according to any of the preceding claims, wherein the dispersion contains Solvent A, Solvent B1, and Solvent C.

5. The dispersion according to any of the preceding claims, wherein the fluoropolymer is a copolymer.

6. The dispersion according to any of the preceding claims, wherein the concentration of the fluoropolymer is more than 10 g/l.

7. The dispersion according to any of the preceding claims, which is suitable for being used in printing or coating.

8. A method of preparing a dispersion as described in any of the preceding claims, comprising the steps of (i) mixing a fluoropolymer and a dispersion medium containing Solvent A to obtain a mixture, wherein the fluoropolymer is not dissolved in the mixture, (ii) heating the mixture to obtain a solution, wherein the fluoropolymer is at least partially dissolved in the solution containing Solvent A, and (iii) cooling the solution to obtain the dispersion of particles having a size of 5 µm or less.

9. The method according to claim 8, comprising the additional steps of (iv) reducing the content of the dispersion medium of the dispersion to obtain a concentrate and (v) mixing the concentrate with a dispersion medium containing Solvent B to obtain a dispersion of the particles.

10. The method according to claim 9 wherein the dispersion medium added in step (v) contains Solvent C in addition to Solvent B.

11. A method of depositing a fluoropolymer on a substrate, wherein the method comprises a step of applying the dispersion of any of claims 1 to 7 on a substrate and a step of drying the dispersion by at least partly evaporating the dispersion medium.

12. The method of claim 11, wherein the dispersion contains Solvent B and Solvent C and the step of drying comprises at least partly evaporating Solvent B, thereby increasing the solvent ratio of C/B.

13. The method according to claim 11 or 12, which is printing or coating.

14. A product comprising a substrate and a fluoropolymer deposited on the substrate, obtainable by the method of any one of claims 11 to 13.
